# EUROPEAN PATENT APPLICATION

(11) **EP 2 270 370 A1**
(43) Date of publication of application: **05.01.2011**
(21) Application number: 09008584.6
(22) Date of filing: 30.06.2009
(51) Int. Cl.: F16K 1/44, F16K 31/122, F01D 17/14

(54) **Actuator assembly for a valve device and a steam turbine system incorporating said valve device**

(71) Applicant: SIEMENS AKTIENGESELLSCHAFT, 80333 München (DE)
(72) Inventor: De, Nihar Ranjan, 110019 New Delhi Delhi (IN); Gupta, Arun, 110085 New Delhi Delhi (IN); Kumar, Amit, 122001 Gurgaon Haryana (IN)

(57) **Abstract**

The present invention provides an actuator assembly (50) for a valve device (10). The valve device (10) includes concentrically mounted first and second valves having respectively a first and a second valve head (22, 26). The proposed actuator assembly (50) comprises a first and a second actuator (52, 24). The first actuator (52) is an annular-shaped actuator operable to actuate displacement said first valve head (22) of said first valve. The second actuator (54) extends concentrically and slidably through the annular-shaped first actuator (52), and is operable to actuate displacement of said second valve head (26) of the second valve.

## Description

The present invention relates to valve devices, and in particular to an actuator assembly for a valve device including a stop valve and a control valve, used, for example, in steam power generation systems.

In a steam power generation system, a valve device is used, for example between a steam generator and a turbine to control the flow of steam to the turbine. Such a valve device typically includes two valves, namely a control valve and a stop valve. The control valve, also known as a governor valve, controls the quantity of steam flowing through the turbine, which, in turn controls the rotation speed or load of the steam turbine. The stop valve is a fast-closing valve which acts in an emergency, such as during control errors or some other, outer fault, to stop steam flow to the turbine completely, to prevent damage to the turbine. The stop and control valves are controlled independently of each other, that is, the stop valve must be able to close independently of the position of the control valve. Typically, each of the stop valve and the control valve includes a valve head, mounted on a respective spindle that can be advanced into an operating position partially or wholly blocking a fluid conduit. Since the stop valve and control valve are required to be controlled independent of each other, such a valve device typically comprises separate actuators for the stop valve and the control valve to independently control the displacement of the stop and control valves, for example, based upon signals received from a controller.

Traditionally, the stop and control valves have been arranged in respective valve casings/housings in a steam flow channel, the stop valve being arranged upstream of the control valve. Herein, the respective valve housings of the stop valve and the control valve each form a perpendicular bend of the steam flow channel, which causes the steam flow to be redirected twice by 90 degrees. This double redirection of the steam flow leads to an important drop of pressure resulting in flow losses. Moreover, since the structure requires two valve housings, such a contraction is costly and further occupies a lot of space around the turbine.

More recently, valve assemblies incorporating both stop valves and control valves in one casing have been developed. In such cases, the actuators for the stop and control valves are accordingly required to be mounted on the same side of the casing. This problem has been solved, for example, by mounting the actuators of the stop control valves actuator on same side of the casing by attaching the two actuators one above the other. However this arrangement leads to increased overhang of the actuator assembly, which leads to higher vibration levels.

The object of the present invention is to overcome the aforementioned disadvantages of the prior art and provide an improved arrangement that minimizes overhang of the actuator assembly for a valve device incorporating a pair of valves (such as a stop and a control valve) and mounted on the same side of a common supporting device, such as a yoke.

The above object has been achieved by an actuator assembly according to claim 1.

The underlying idea of the present invention is to mount one of the actuators inside another actuator having annular shape, thus providing a compact actuator design for use in compact valve device. The proposed design reduces actuator overhang, which results in a reduction in vibration levels. Further, the proposed actuator assembly would require lesser space at power station.

In one embodiment, the first actuator further comprises:
- a hydraulically pressurizable annular-shaped cylindrical chamber having a central cylindrical spacing for mounting said second actuator thereto,
- an annular-shaped actuator head disposed within said annular-shaped cylinder and displaceable by said hydraulic pressure, and
- one or more eccentrically mounted actuator stems mounted on said annular-shaped actuator head and operable to actuate displacement said first valve head.

The above embodiment provides a compact design for an annular actuator.

In a further embodiment, the first actuator further comprises a biasing member disposed within said annular-shaped chamber against said actuator head and biased against said hydraulic pressure. The biasing member facilitates advancement of the actuator stem during closing of the first valve. In an exemplary embodiment, the biasing member comprises a helical spring. Helical springs are annular in shape, having a large unutilized central spacing, and are hence suitable to be disposed in the annular-shaped chamber

In another aspect of the present invention a valve device is provided, said valve device comprising:
- first and second valves mounted concentrically with respect to each other and comprising respectively a first and a second valve head,
- an annular-shaped first actuator operable to actuate displacement said first valve head of said first valve, and
- a second actuator extending concentrically and slidably through said first actuator, said second actuator being operable to actuate displacement of said second valve head of the second valve.

In one embodiment of the valve device, said first and second valves are housed within and on the same side of a common casing, the inner surface of said casing further defining a fluid flow channel connecting an inlet port to an outlet port, said first and second valves operable to influence fluid flow in said flow channel between said inlet port and said outlet port.

In an exemplary embodiment of the valve device, one of said first and second valves is configured to be actuated as a stop valve and the other is configured to be actuated as a control valve, said stop and control valves operable independent of each other, wherein the valve head of the configured stop valve is displaceable between a closed position isolating said inlet port from said outlet port, and an open position allowing fluid communication between said inlet port and said outlet port, and the valve head of the configured control valve is displaceable to control flow rate of fluid passing along said fluid flow channel.

In an advantageous embodiment of the valve device, said fluid flow channel is configured and arranged to turn the fluid by an angle greater than 90 degrees between the inlet port and the outlet port. This prevents abrupt changes in the direction of fluid flow by providing a gradual deflection to the fluid flow channel, thereby minimizing pressure losses.

In a preferred embodiment of the valve device, said first valve head of said first valve is mounted on an annular-shaped first spindle and said second valve head of said second valve is mounted a second spindle extending concentrically and slidably through said first spindle, and wherein said first spindle is coupled to said first actuator and said second spindle is coupled to said second actuator. This embodiment allows application of concentric driving force on the valve spindles by the concentric actuators of the present invention and provides simplicity manufacturing of the valve assembly.

In still another aspect of the present invention, a system is provided that comprises a valve device according to the aforementioned embodiments, the system further comprising a controller adapted to monitor conditions external and/or internal to said valve device, and to control the position of the first and second valves based upon said conditions.

In yet another aspect of the present invention, a steam turbine system is provided comprising steam generator, a steam turbine, and a fluid flow channel for transferring steam from the steam generator to the steam turbine, wherein said steam turbine system includes a valve device according to the aforementioned embodiments, said valve device being adapted to influence flow of steam through said fluid flow channel.

The present invention is further described hereinafter with reference to illustrated embodiments shown in the accompanying drawings, in which:
FIG 1 is a sectional view of a valve device incorporating the proposed actuator assembly according to one embodiment of the present invention,
FIG 2 is a sectional view of a valve device according to another embodiment of the present invention,
FIG 3 is a sectional view of a valve device according to yet another embodiment of the present invention, and
FIG 4 is a schematic diagram of a steam turbine system according one aspect of the present invention.

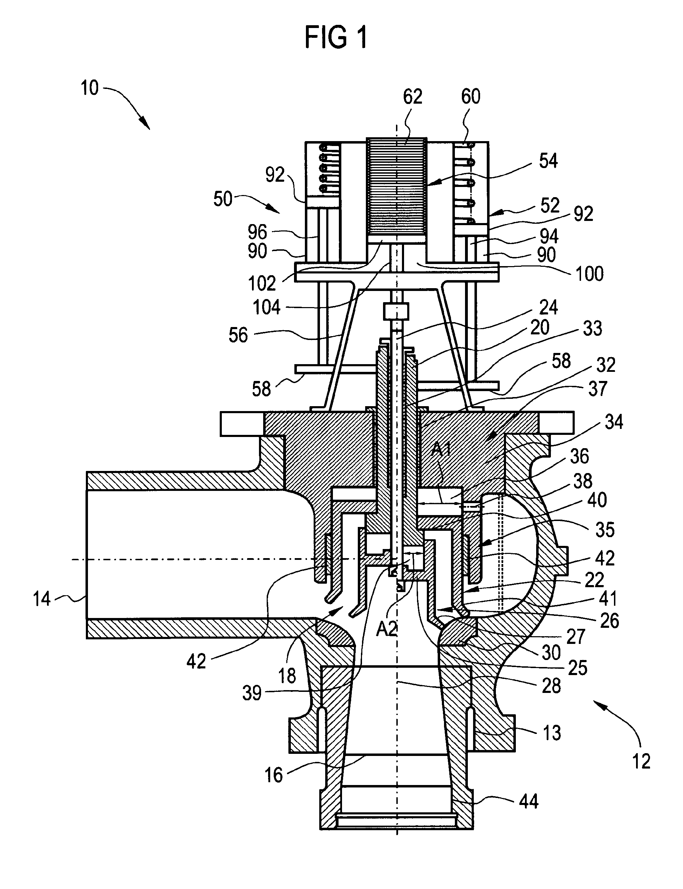

Referring now to the drawings, wherein like characters designate like or corresponding parts, there is shown in FIG 1 a valve device 10 according one embodiment of the present invention. It should be noted that in the depiction in FIG 1, the portion of the valve device 10 to the right of the axis 28 represents a closed position and the portion to the left of the axis 28 represents an open position. This is only for illustrative purposes. In reality, the valve device 10, more particularly the valve heads, valve spindles and the actuators are substantially symmetrical about the axis 28. The valve device 10 may be broadly considered to include a valve assembly 12 and an actuator assembly 50. The valve assembly 12 includes a fluid inlet port 14 and a fluid outlet port 16, connected by a fluid flow channel 18. In this example, the valve device 10 is for use in steam turbine system, the inlet port 14 is typically connected to a steam channel from a steam generator (not shown in FIG 1), while the outlet port 16 leads to a steam turbine (not shown in FIG 1) via a diffuser 44. A casing 13 forms a pressure vessel for the fluid flowing through the flow channel 18. The flow of steam through the channel 18 is influenced by concentrically mounted first and second valves, for example a stop valve and a control valve, having respectively a first valve head 22 and a second valve head 26, housed in the casing 13. The actuator assembly 50 includes a first actuator 52 and second actuator 54 operable respectively to actuate the displacements of the first valve head 22 and the second valve head 26. In case of a valve assembly having a stop valve and the control valve, the actuation of the two valves is typically performed independent of each other.

In accordance with the present invention one of the actuators is placed inside another actuator having annular shape, thus providing a compact actuator design for use in compact valve device. Accordingly, the first actuator 52 is hollow, i.e., has an annular-shape, and the second actuator 54 extends concentrically and slidably through the first actuator 52. The actuator 52 includes an annular-shaped cylindrical chamber 90 that can be pressurized with hydraulic fluid. The second actuator 54 is mounted within the central cylindrical spacing of the annular-shaped cylindrical chamber 90. Within the annular cylindrical chamber 90 is disposed an annular actuator head 92. Upon the actuator head 92 are mounted one or more eccentrically disposed actuator stems 94, 96 that control the displacement of the first valve head 22. The actuator 54 includes a cylindrical hydraulically pressurizable chamber 100 within which is disposed an actuator head 102. Upon the actuator head 102 is mounted an actuator stem 104 that controls the displacement of the valve head 26.

The actuators 52 and 54 further comprise biasing members 60, 62 disposed against respective actuator heads 92, 102 and biased against the pressure of the hydraulic fluid inside the chambers 90 and 100 respectively. In this example, the biasing member 60 in the annular actuator 52 comprises helical springs while the biasing member 62 in the central actuator 54 comprises disc springs. Disc springs provide high compressive force. On the other hand, helical springs are annular in shape, having a large unutilized central spacing, and are hence suitable to be disposed in the annular-shaped chamber 90.

The above-described arrangement minimizes actuator overhang and thus reduces vibration of the actuators, while also providing a compact design, wherein the entire actuator assembly may be supported with the single yoke 56. Such an actuator design advantageously minimizes the space requirement at the power station.

In operation, the actuators 52 and 54 are generally controlled by a controller based on internal and/or external factors monitored by the controller. To that end, hydraulic chambers 90 and 100 are controllable by respective servo valves (not shown) which convert electrical signals from the controller into hydraulic signals that dump or withdraw fluid from the hydraulic chambers, causing displacement of the actuators. The biasing means 60 and 62 are employed to close the respective valves when the hydraulic fluid is dumped from the respective cylinders upon receiving a signal from the controller via the servo valves.

In the illustrated embodiment, the first valve is a stop valve having a stop valve head 22 mounted on a first annular-shaped or hollow spindle 20. The annular-shaped spindle 20 of the stop valve is coupled to the actuator stems 94 and 96 of the first actuator 52, for example, by a coupling member 58. The stop valve is a fast-closing valve operable to act in an emergency to completely stop steam flow through the channel 18 to the outer port 16. For example, in a steam turbine system, a stop valve may in the event of a control error or some other, outer fault, to stop steam flow to the turbine completely. Accordingly, the spindle 20 operates to displace the stop valve head 22 along a central valve axis 28 essentially between two positions, namely, a completely open position, represented by the position of the valve device to the left of the axis 28, and a closed position represented on the right of the axis 28. As shown, in the open or retracted position, the outlet port 16 is in fluid communication with the inlet port 14, while in the closed position, the stop valve head 22 rests on an annular valve seat 30, isolating the outlet port 16 from the inlet port 14. The second valve is a control valve, comprising a control valve head 26 mounted on a second spindle 24. The spindle 24 of the control valve extends concentrically and slidably through the hollow spindle 20 of the stop valve and is co-axially coupled to the actuator stem 104 of the second valve 54. The spindle 24 operates to displace the control valve head 26 towards and away from the valve seat 30, which is common to both the stop valve and the control valve. The control valve thus functions as a governor for controlling the quantity fluid (or flow rate of the fluid) flowing through the flow channel 18.

This exemplary embodiment of the valve assembly 10 allows concentric movement of the stop and control valves that are arranged in the same side of a common casing and is further advantageous for use with a concentric actuator assembly 50 as described above. Further advantageously, providing concentric hole to one of the spindles (the stop valve spindle, in this example) is easy from manufacturing point of view in comparison to having one concentric spindle and multiple eccentric spindles (described hereinafter) as the latter present difficulty in the machining process and may result in malfunctioning by sticking of valve spindle.

In the illustrated embodiment, the valve head 22 has an L-shaped cross-sectional view, comprising a first portion 40 (also known as a pre-stroke portion) disposed along a plane perpendicular the axis 28 and a second portion 41 disposed along a plane parallel to the axis 28. Likewise, the valve head 26 has a first portion 25 disposed along a plane perpendicular the axis 28 and a second portion 27 disposed along a plane parallel to the axis 28. The first portion 25 of the valve head 26 and the spindle 24 define a first spacing 39. The spacing 39 accommodates substantially independent operation of the first and second valves. The portions 41 and 27 of the valve heads 22 and 26 respectively comprise hollow conical bodies.

To guide the movement of the spindle 24 against the hollow spindle 20, a bushing 33 is disposed concentrically between the two spindles 20 and 24. The bushing 33 additionally prevents leakage of steam between the two valve spindles. A valve cover 34 annularly surrounds the hollow spindle 20. The valve cover 34 has a first portion 35 defining a second spacing 36 between it and the pre-stroke portion 40 of the valve head 22. This spacing 36 is fluidically connected to the flow channel 18 via one or more openings 38 on the valve cover 34 which allow steam to fill up the spacing 36. The projected area A1 of the spacing 36 perpendicular to the axis 28 is greater than the projected area A2 of the spacing 39 perpendicular to the axis 28. This ensures a positive steam pressure along the axis 28 toward the direction of closing of the stop valve, which reduces the actuating force required for opening the stop valve when the steam is allowed to move to the spacing 39 via the pre-stroke portion 40. The stop valve spindle 20 is slidable against a second portion 37 of the valve cover 34. To guide the movement of the spindle 20, bushings 32 may be disposed between the spindle 20 and portion 37 of the valve cover 34, which also serves to provide a seal against leakage of steam from the spacing 36. In the illustrated embodiment, a guide bush 42 is further provided between the portion 35 of the valve cover 34 and the valve head 22 that slides against it.

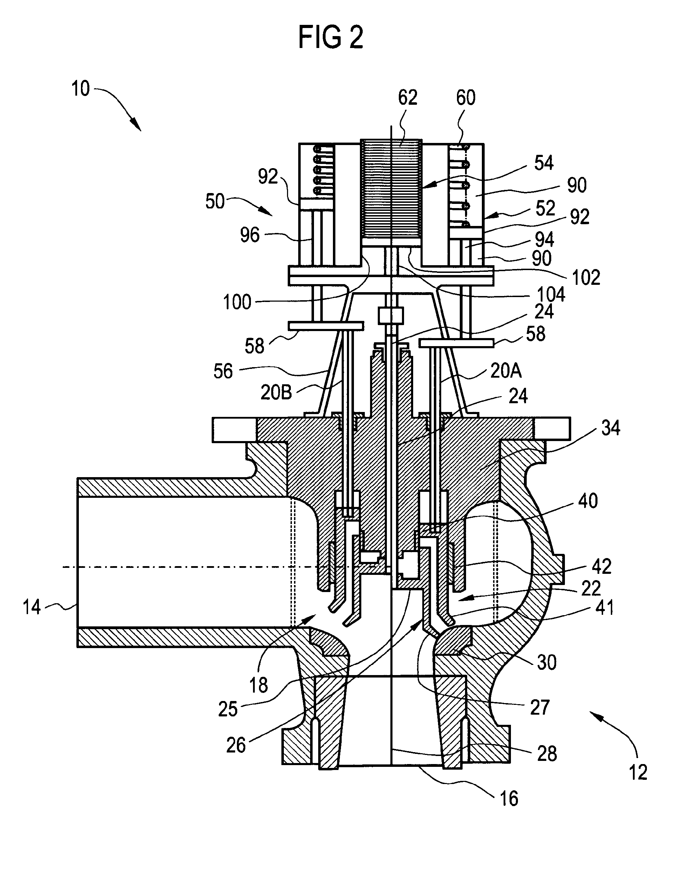

FIG 2 illustrates an alternate embodiment of a valve device 10 having a similar design for the actuator assembly 50 as described above but an alternate design for the valve assembly 12. Herein the valve head 22 of the first valve is mounted on one or more eccentric spindles 20A, 20B coupled to the actuator stems 94, 94 of the first actuator 52 via coupling member 58. The valve head 26 of the second valve is mounted on a central spindle 24 coupled co-axially to the stem 104 of the second actuator 54. The spindles 20A, 20B and 24 are surrounded by a valve cover 34. The valve head 22 has a first portion 40 disposed along a plane perpendicular the axis 28 and a second portion 41 disposed along a plane parallel to the axis 28. The eccentric spindles 20A and 20B are coupled to the first portion 40, for example by bolts. Likewise, the valve head 26 has a first portion 25 disposed along a plane perpendicular the axis 28 and a second portion 27 disposed along a plane parallel to the axis 28.

Still alternately, the proposed actuator assembly 50 can be used with any other type of valve assembly.

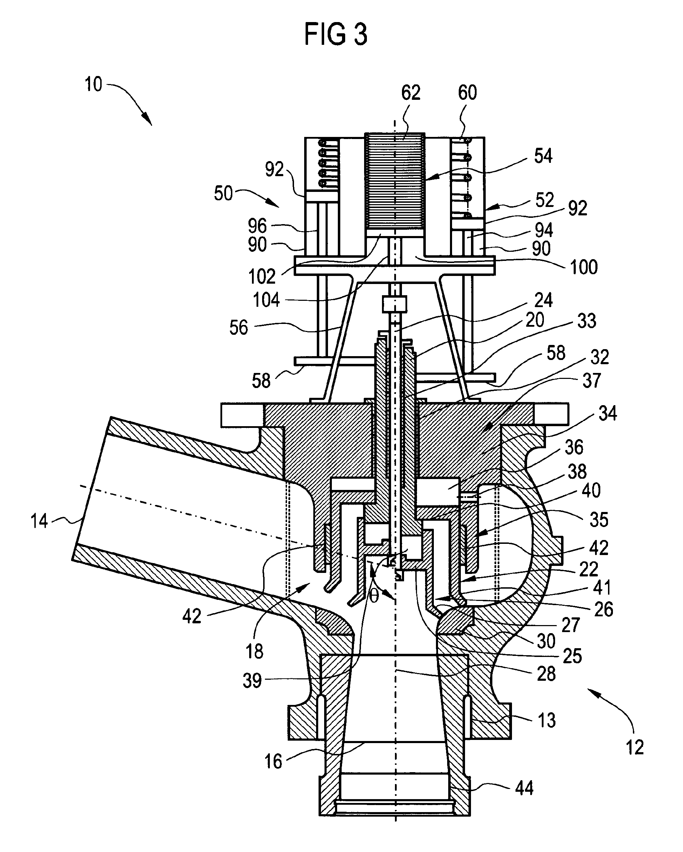

In the embodiments illustrated in FIG 1 and FIG 2, the fluid flow channel 18 redirects the fluid (for e.g. steam) by an angle of 90 degrees as is also true for conventional designs. However, in a preferred embodiment, illustrated in FIG 3, the fluid flow channel 18 is configured and arranged to turn the fluid by an angle θ greater than 90 degrees between the inlet port 14 and the outlet port 16. Advantageously, this embodiment prevents abrupt changes in the direction of fluid flow by providing a gradual deflection to the fluid flow channel, thereby minimizing important pressure flow losses. Further, it should be noted that in the illustrated embodiments, the outer valve including the hollow spindle 20 and the valve head 22 is configured to be actuated as the stop valve, while the inner valve including the spindle 24 and the valve head 26 is configured to be actuated as the control valve. This is advantageous, since the inner valve head, being lesser in diameter than the outer valve head, provides greater control in adjusting fluid flow rate through the channel 18. However, it would be also possible to configure and operate the outer valve as the control valve and the inner valve as the stop valve.

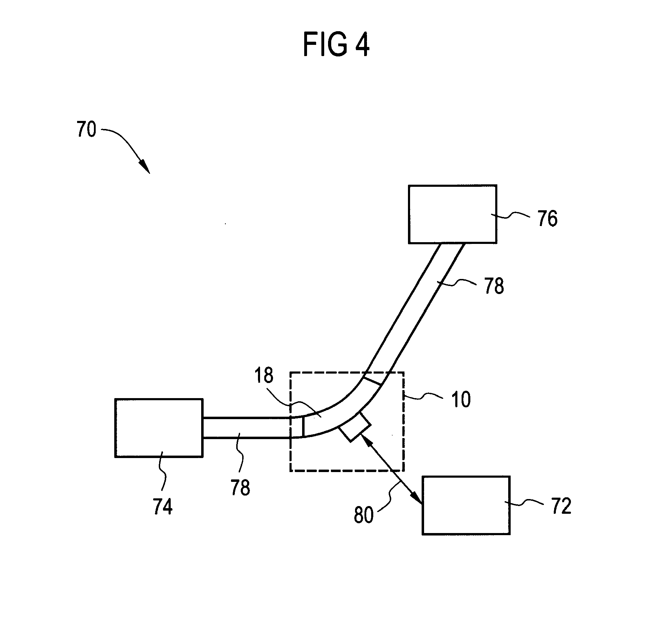

FIG 4 illustrates a steam power system 70 incorporating a valve device 10 according to the present invention. The valve device 10 is arranged such that the flow channel 18 is part of a flow channel 78 between a steam generator 74 and a steam turbine 76. The stop and control valves are controlled by a controller 72, which monitors factors such as the speed or load of the turbine 76, to ascertain what changes should be made to improve the running of the power system 70. The controller 72 controls the valve device 10 via a wired or wireless communication link 80.

During operation of the system 70, the steam generator 74 heats water to generate steam which passes from the steam generator 74 into the channel 18 of the valve device 10. The channel 18 is normally open (i.e., the inlet port is in communication with the outlet port), with the stop valve head 22 fully retracted and the control valve head 26 is positioned to regulate the pressure of the steam and, therefore, the speed of the turbine 76. The controller 72 monitors the condition of the system 70 and regulates the control valve head 26 accordingly by displacing the control valve spindle 24 using the control valve actuator 54.

If operational conditions require that steam flow through channel 78 should be prevented (which may be due to an emergency but may equally be part of the normal operation of the system 70), the controller 72 controls the stop valve actuator 52 via the communication link 80 to urge the stop valve forward to its closed position, in which the channel 18 is sealed.

Summarizing, the present invention provides an actuator assembly for a valve device. The valve device includes concentrically mounted first and second valves having respectively a first and a second valve head. The proposed actuator assembly comprises a first and a second actuator. The first actuator is an annular-shaped actuator operable to actuate displacement said first valve head of said first valve. The second actuator extends concentrically and slidably through the annular-shaped first actuator, and is operable to actuate displacement of said second valve head of the second valve.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined by the below-mentioned patent claims.

## Claims

1. An actuator assembly (50) for a valve device (10), said valve device (10) comprising concentrically mounted first and second valves having respectively a first and a second valve head (22, 26), said actuator assembly (50) comprising:
- an annular-shaped first actuator (52) operable to actuate displacement said first valve head (22) of said first valve, and
- a second actuator (54) extending concentrically and slidably through said first actuator (52), said second actuator (54) being operable to actuate displacement of said second valve head (26) of the second valve.

2. The actuator assembly (50) of claim 1, wherein said first actuator (52) further comprises:
- a hydraulically pressurizable annular-shaped cylindrical chamber (90) having a central cylindrical spacing for mounting said second actuator (54) thereto,
- an annular-shaped actuator head (92) disposed within said annular-shaped cylinder (90) and displaceable by said hydraulic pressure, and
- one or more eccentrically mounted actuator stems (94, 96) mounted on said annular-shaped actuator head (92) and operable to actuate displacement said first valve head (22).

3. The actuator assembly (50) according to any of the preceding claims, wherein said first actuator (52) further comprises a biasing member (60) disposed within said annular-shaped chamber (90) against said actuator head (92) and biased against said hydraulic pressure.

4. The actuator assembly (50) according to any of the preceding claims, wherein said biasing member (60) comprises a helical spring.

5. A valve device (10), comprising:
- first and second valves mounted concentrically with respect to each other and comprising respectively a first and a second valve head (22, 26),
- an annular-shaped first actuator (52) operable to actuate displacement said first valve head (22) of said first valve, and
- a second actuator (54) extending concentrically and slidably through said first actuator (52), said second actuator (54) being operable to actuate displacement of said second valve head (26) of the second valve.

6. A valve device (10), comprising:
- first and second valves mounted concentrically with respect to each other and comprising respectively a first and a second valve head (22, 26), and
- an actuator assembly (50) according to any of claims 1 to 4, wherein said first actuator (52) is operable to actuate the displacement of said first valve head (22) of said first valve and said second actuator (54) is operable to actuate displacement of said second valve head (26) of said second valve.

7. The valve device (10) according any of claims 5 and 6, wherein said first and second valves are housed within and on the same side of a common casing (13), the inner surface of said casing (13) further defining a fluid flow channel (18) connecting an inlet port (14) to an outlet port (16), said first and second valves operable to influence fluid flow in said flow channel (18) between said inlet port (14) and said outlet port (16).

8. The valve device (10) according to any of claims 5 to 7, wherein one of said first and second valves is configured to be actuated as a stop valve and the other is configured to be actuated as a control valve, said stop and control valves operable independent of each other, wherein the valve head (22) of the configured stop valve is displaceable between a closed position isolating said inlet port (14) from said outlet port (16), and an open position allowing fluid communication between said inlet port (14) and said outlet port (16), and the valve head (26) of the configured control valve is displaceable to control flow rate of fluid passing along said fluid flow channel (18).

9. The valve device (10) according to any of claims 5 to 8, wherein said first valve head (22) of said first valve is mounted on an annular-shaped first spindle (20) and said second valve head (26) of said second valve is mounted a second spindle (24) extending concentrically and slidably through said first spindle (20), and wherein said first spindle (20) is coupled to said first actuator (52) and said second spindle (24) is coupled to said second actuator (54).

10. The valve device (10) according to any of claims 5 to 8, wherein the second valve comprises a centrally mounted spindle (24) upon which said second valve head (26) is mounted, and said first valve comprises one or more eccentrically mounted spindles (20A, 20B) upon which said first valve head (22) is mounted.

11. The valve device (10) according to any claims 5 to 10, wherein said fluid flow channel (18) is configured and arranged to turn the fluid by an angle (θ) greater than 90 degrees between the inlet port (14) and the outlet port (16).

12. A system (70) comprising a valve device (10) according to any of claims 5 to 11 and further comprising a controller (72) adapted to monitor conditions external and/or internal to said valve device (10), and to control the position of the first and second valves based upon said conditions.

13. A steam turbine system (70) comprising steam generator (74), a steam turbine (76), and a channel (78) for transferring steam from the steam generator (74) to the steam turbine (76), wherein said steam turbine system (70) includes a valve device (10) according to any of claims 5 to 11, said valve device (10) being adapted to influence flow of steam through said channel (78).
